# EUROPEAN PATENT APPLICATION

(11) **EP 1 035 668 A2**
(43) Date of publication of application: **13.09.2000**
(21) Application number: 00300897.6
(22) Date of filing: 04.02.2000
(51) Int. Cl.: H04B 10/08

(54) **Optical signal transmission system**

(30) Priority: 12.03.1999 GB 9905718
(71) Applicant: Marconi Communications Limited, Coventry, CV3 1HJ (GB)
(72) Inventor: Regan, Michael, Coventry CV2 4BQ (GB)
(74) Representative: Hoste, Colin Francis

(57) **Abstract**

A signal transmission system uses an optical signal for carrying traffic information, and is also brightness modulated by a relatively low frequency signal. It is impractical to monitor directly the traffic information on the optical carrier for the presence of errors, and the error rate in the low frequency modulation is monitored, as its error rate is found to be indicative of traffic error. The system uses a number of traffic-carrying optical carriers, and also a supervisory or overhead optical carrier, all of which are provided with low frequency modulations whose error rates can be monitored to provide an indication of system performance.

## Description

This invention relates to signal transmission systems, and more particularly, to systems in which an optical carrier is used to carry traffic. The traffic represents data, including voice data, from many sources or tributaries which are multiplexed at the transmit end of a communication path into a complex electrical signal which takes advantage of the available bandwidth of the path. When the traffic is transmitted on an electrical carrier signal in a complex multiplex format, such as that known as SDH, access is, in principle, possible to the individual channels, without decompiling the entire signal, in order to monitor for the presence of errors.

In any signal transmission medium, there exists the possibility that traffic data may be corrupted, due to noise or non-linear characteristics of the system, or to malfunction of system components, and it is highly desirable to have early knowledge of data errors which can be indicative of system deterioration. For a signal transmission system in which an optical carrier is used, it is generally necessary for the data to be checked for errors at its destination, after it has been demultiplexed to electrical signals, as it is very difficult if not impossible to identify errors present in the traffic whilst it is in optical form.

The present invention seeks to provide improved error monitoring of a signal transmission system.

According to this invention, a signal transmission system having an optical carrier for carrying traffic data, includes means for monitoring optical modulation which is present on an optical carrier, means for determining errors present in the optical modulation, and utilising said errors as a measure of the likelihood of errors in said traffic data.

In any signal transmission system, it is possible for traffic data to be corrupted as it passes from one stage to the next, and it is desirable to determine a measure of the error rate which is present in, or introduced by, a particular section of a transmission system, so that if the error rate starts to become unacceptably high, that section can be shut down and traffic diverted around it whilst it is repaired or replaced. In a transmission system in which traffic data is modulated onto an optical carrier, it is very difficult to monitor the integrity of the traffic data itself on the optical carrier, and in SDH systems for example, it has been customary to monitor the traffic data for this purpose only after it has been converted back to an electrical signal format at a receiver stage. It is also desirable to determine a measure of the error rate for the end to end path as a whole.

The invention enables a measure of traffic error rates to be determined, without the need to monitor the traffic data directly.

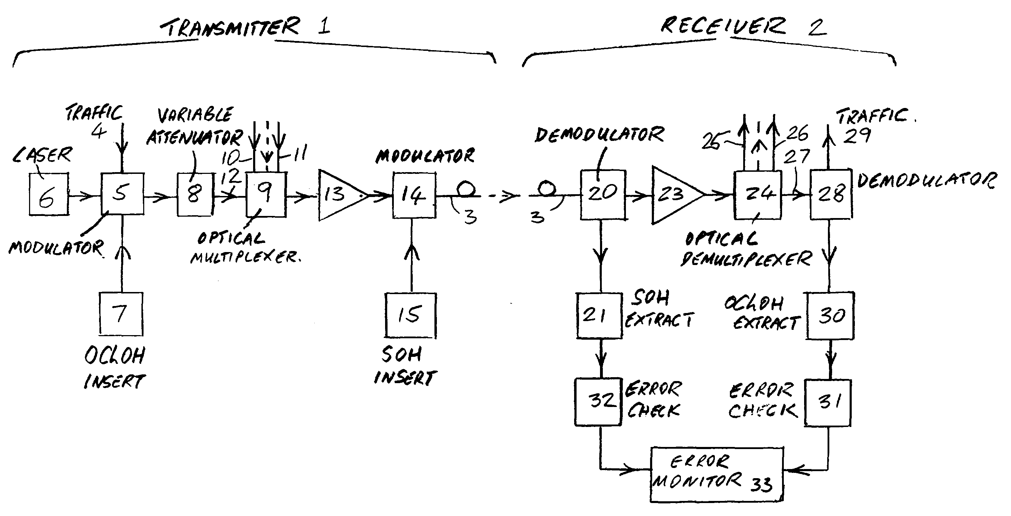

The invention is further described by way of example with reference to the accompanying drawing which illustrates a signal transmission system in accordance with the invention.

Referring to the drawing, there is shown therein part of an optical transmission system, in which an optical carrier is transmitted from a transmitter 1 to a receiver 2 via a light guide 3, which in practice could be many kilometres in length.

Data traffic 4 is received as a complex multiplexed wideband electrical signal, for example in an SDH format, and is modulated by modulator 5 onto an narrow bandwidth optical carrier which is generated by a laser 6. Although the optical carrier is narrowband in optical terms, it is, of course, extremely wide in electrical terms.

An optical channel overhead (OChOH) signal, sometimes termed an optical path overhead (OPOH) signal is generated by an OChOH insert unit 7 and is modulated onto the optical carrier by the modulator 5. The OChOH signal typically has a bandwidth of 8 to 10kbit/s and is modulated onto a 100kHz electrical carrier. It is used for supervisory purposes and is utilised for this purpose at the receiver 2. The modulated carrier is passed through a variable attenuator 8 (which is used to control the gain of the optical system) to an optical multiplexer 9. The optical multiplexer 9 receives a number of other optical carriers 10, 11 etc. each at a different wavelength, and each of which carries traffic data in a similar manner to that for input 12 and combines them in a wave division multiplex (WDM) manner. The multiplexer 9 may also receive an unmodulated optical carrier onto which a section overhead signal is added at a later stage by modulator 14, although this unmodulated optical carrier may be added to the WDM signal between the multiplexer 9 and the modulator 14. Thus, each optical carrier 10, 11 etc. would have associated with it a laser, traffic, OChOH insert unit, modulator, and a variable attenuator, but for the sake of clarity these are not separately shown.

A wavelength division multiplexed (WDM) optical signal is thus generated by the optical multiplexer 9, and this is fed via an optical amplifier 13, in this case an erbium doped fibre amplifier, to a further modulator 14.

A section overhead signal (SOH) is generated at an SOH insert unit 15, and is modulated by modulator 14 onto the separate dedicated optical carrier which does not carry traffic and which is present in the optical WDM signal. The SOH typically has a rate of 2Mbit/s and is used for supervisory purposes.

The modulated optical carriers are transmitted over the light guide 3 and are received at the remote receiver 2, and firstly the SOH is removed at a demodulator 20 and passed to an SOH extraction unit 21. The optical carriers, all but one of which carries traffic, are passed via a further optical amplifier 22 which regenerates the optical signals, to an optical demultiplexer 24. Typically, a variable gain attenuator (not shown) would be positioned between the demodulator 20 and the amplifier 23. The optical demultiplexer 24 acts to separate out the individual optical carriers 25, 26 etc, and 27, and each is passed to separate demodulator 28, where the traffic data 29 is extracted and the OChOH signal is recovered and passed to OChOH extract unit 30.

It will be seen that an OChOH is modulated onto each of the traffic channels prior to amplification. Any noise introduced by the amplifier will therefore affect both the traffic and the OChOH, and therefore the measured performance of the OChOH as received at subsequent nodes will give an indication of performance of the traffic.

The modulation index of the OChOH is chosen to be lower than the modulation index of the traffic, such that the error rate expected on the OChOH is related to the error rate expected on the traffic approximately in proportion to the relative bandwidth. Performance error monitoring at error check unit 31 is done on the OChOH by means of comparison of repeated inverted bytes. Modelling has indicated that the use of a low data rate for the OChOH (typically 8 to 10kbit/s) does not invalidate performance statistics generated from it. Persistency checks are run on the number of consecutive degraded/severely errored seconds required to enter the degrade/unavailable condition.

The power level of the SOH is chosen such that it will start to show errors at a similar attenuation as the traffic channels. Performance error monitoring is done on the SOH by means of bit interleaved parity (BIP) checks at error check unit 32.

Thus, error measurements are performed on the SOH signal by error check unit 32, and on the OChOH signal by error check unit 31. These error measurements give direct performance indicators only of the photonics layer, ie the optical carriers, and not the data traffic itself. However, the error rate detected in these signals is closely representative of errors in the data traffic, and by monitoring the detected errors by an error monitor 33, problems in the signal transmission system can be identified and dealt with.

## Claims

1. A signal transmission system having an optical carrier for carrying traffic data including means for monitoring optical modulation which is present on an optical carrier, means for determining errors present in the optical modulation, and utilising said errors as a measure of the likelihood of errors in said traffic data.

2. A system as claimed in Claim 1, and wherein the bandwidth of the optical modulation is lower than that of traffic data carried by the system.

3. A system as claimed in Claim 2 and wherein the optical modulation is present on a carrier which has a frequency which is lower than that of the traffic data carried by the system.

4. A system as claimed in any of the preceding claims, and wherein a plurality of optical carriers are provided which carry data traffic, and each of the optical carriers is modulated with a relatively low frequency envelope modulation.

5. A system as claimed in Claim 4 and wherein an additional optical carrier is provided, which does not carry data traffic, and which carries a further optical modulation.

6. A system as claimed in Claim 5 and wherein at a receiver, the presence of errors is monitored in said low frequency envelope modulation, and in said further optical modulation.

7. A system as claimed in Claim 4 and wherein means are provided for modulating said optical carriers with the low frequency envelope modulation before said optical carriers are multiplexed in a wave division multiplex format.

8. A system as claimed in Claim 5 and wherein means are provided for adding as a separate step said further optical modulation is added to said additional optical carrier in an optical path which carries the multiplexed optical carriers.
